(19) Europäisches Patentamt

European Patent Office

Office européen des brevets

(11) **EP 2 963 385 A1**

(12) **EUROPEAN PATENT APPLICATION**

(43) Date of publication:
06.01.2016 Bulletin 2016/01

(51) Int Cl.:
*G01C 9/08* (2006.01)          *B60Q 1/10* (2006.01)
*B60Q 1/115* (2006.01)        *B60R 1/06* (2006.01)
*B60W 40/11* (2012.01)

(21) Application number: 15175120.3

(22) Date of filing: 02.07.2015

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: 03.07.2014 US 201462020704 P

(71) Applicant: **Memsic, Inc.**
**Andover, MA 01810 (US)**

(72) Inventor: **FENNELLY, James**
**Stoneham, MA Massachusetts 02180 (US)**

(74) Representative: **Boult Wade Tennant**
**Verulam Gardens**
**70 Gray's Inn Road**
**London WC1X 8BT (GB)**

(54) **METHOD AND APPARATUS FOR DETERMINING THE INCLINATION OF A MOVING VEHICLE WITH RESPECT TO THE ROAD AND FOR PERFORMING DYNAMIC HEADLIGHT LEVELING**

(57) A method and system for determining the inclination of the suspended portion of a moving vehicle with respect to the road from a 2 axis or 3 axis accelerometer, inclinometer, or the like, for use in controlling a system or device that is dependent upon inclination. The method and system provide for the determination of the angle of inclination of the portion of the vehicle which is suspended with respect to the portion of the vehicle which is not suspended. The angle of inclination is derived from the dependence of acceleration along the axis normal to the vehicle (z axis) due to longitudinal (x axis) and/or latitudinal (y axis) accelerations of the vehicle.

EP 2 963 385 A1

**Description**

**BACKGROUND OF THE INVENTION**

The present invention relates generally to inclination measurement of a suspended portion of a vehicle with respect to a non-suspended portion and the control of an electromechanical device or system based upon such measurement.

The total inclination of a vehicle in both pitch and roll ($\theta_T$, $\rho_T$) can be determined when the vehicle is at rest using a 2 or 3 axis accelerometer to determine the Gravity vector's orientation to the axes using trigonometry functions. For example $\theta_T$ and $\rho_T$ can be calculated from acceleration data provided by a 2 axis accelerometer arranged in a plane parallel to the vehicle's longitudinal and latitudinal axes as $\theta_T$= arcsine(acceleration along the x axis) and $\rho_T$ as arcsine(acceleration along the y axis). For a 2 axis accelerometer arranged in a plane normal to the vehicle with the x axis aligned along the longitudinal axis of the vehicle, $\theta_T$ is calculated as the arctangent of the ratio of the acceleration along the x axis to the acceleration along the z axis. Adding an orthogonal third axis allows for calculation of both pitch and roll using the arctangent method. However, a vehicle, during normal operation, experiences acceleration along multiple axes of similar magnitude as the acceleration due to gravity. Low pass filtering can remove much of the interfering accelerations but cannot remove the slow changing accelerations associated with changes in the road inclination.

Measuring the inclination angle of the suspended portion of a vehicle in relation to the unsuspended portion of a vehicle ($\theta_v$) while the vehicle is in motion with accelerometers or inclinometers is desirable for determining loading conditions of the vehicle. Generally vehicle loading does not change while the vehicle is in motion, therefore $\theta_v$ does not change. Road inclination variations and normal accelerations associated with a moving vehicle are of much greater magnitude than the acceleration changes associated with the change in posture of a vehicle on its suspension system. Road inclinations can change on the order of $\pm 15$ degrees, while the suspended portion of a vehicle in relation to the non-suspended portion of the vehicle only changes by approximately $\pm 1.5$ degrees.

It would be desirable to have a method and system that provides the ability to calculate the inclination angle $\theta_v$ to a high accuracy independent of the road inclination ($\theta_r$ which is usable to control a vehicle headlight leveling system, or alternatively other electromechanical or electronic control systems.

**BRIEF SUMMARY OF THE INVENTION**

In accordance with the present invention, a system and method are disclosed for obtaining a measurement of the inclination of a suspended portion of a moving vehicle in relation to the non-suspended portion independent of the road inclination. The measurement is obtained by examining the dependence of accelerations normal to the suspended portion of the vehicle (z-axis) with respect to longitudinal accelerations of the suspended portion of the vehicle (x-axis). In one embodiment, acceleration data corresponding to two or more axes are collected from an acceleration measuring device such as an accelerometer. A filtering device filters the acceleration data to provided filtered acceleration data and the filtered acceleration data is stored in a memory. A processor generates a least squares best fit regression and calculates a slope from the least squares best fit regression which corresponds to an angle of inclination of the vehicle with respect to the road. In one embodiment, the system produces an output indicative of the angle of inclination of the suspended vehicle portion with respect to the road which is used to control an electromechanical system such as a vehicle headlight leveling system.

**BRIEF DESCRIPTION OF THE SEVERAL VIEWS OF THE DRAWINGS**

The invention will be more fully understood by reference to the Detailed Description of the Invention in conjunction with the Drawings of which:

FIG. 1A is a schematic diagram illustrating the relationship between the vehicle acceleration and deceleration vector to the acceleration measurement vectors under normal condition where the suspended section of the vehicle is aligned with the non-suspended section of the vehicle.

FIG. 1B is a schematic diagram illustrating the relationship between the vehicle acceleration and deceleration vector to the acceleration measurement vectors under a condition where the suspended section of the vehicle is not aligned with the non-suspended section of the vehicle.

FIG. 2A and 2B are time series acceleration data from a drive test with the vehicle under loading condition 1.

FIG. 3A and 3B are filtered time series acceleration data from a drive test with the vehicle under loading condition 1.

FIG. 4A and 4B are z vs. x acceleration scatter plots and calculated linear regression lines of the data in (FIG. 2A and 2B), and (FIG 3A and 3B) respectively.

FIG. 5A and 5B are time series acceleration data from a drive test with the vehicle under loading condition 2.

FIG. 6A and 6B are filtered time series acceleration data from a drive test with the vehicle under loading condition 2.

FIG. 7A and 7B are z vs. x acceleration scatter plots and calculated linear regression lines of the data in (FIG. 5A and 5B), and (FIG 6A and 6B) respectively.

FIG. 8A is a block diagram of a inclination calculation system operative in accordance with the present invention;

FIG. 8B is a diagram illustrating signal processing in accordance with the present invention; and

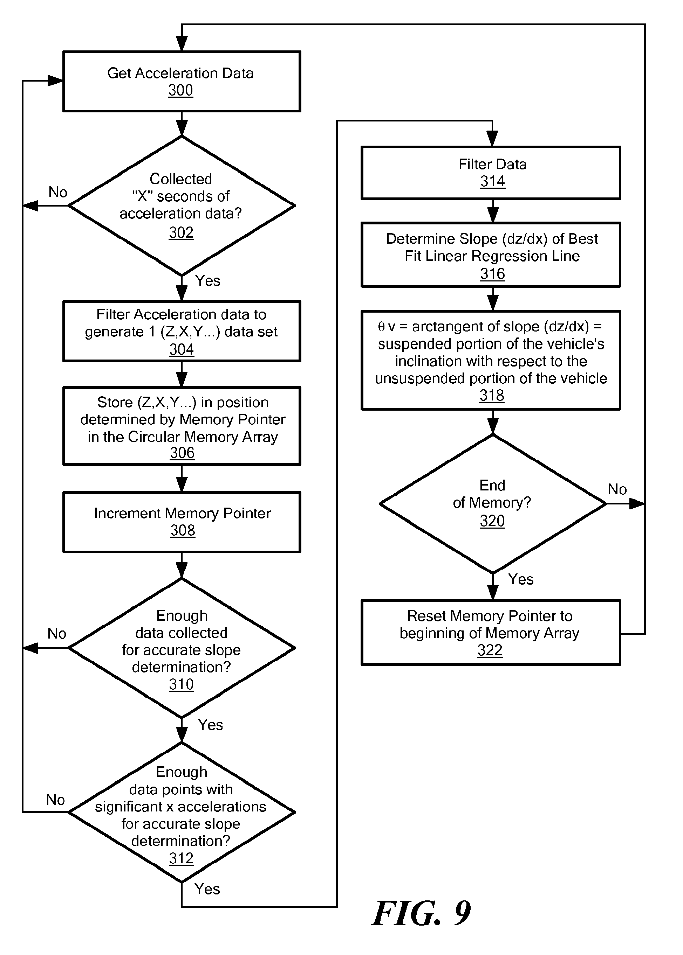

FIG. 9 is a flow diagram illustrating an exemplary method in accordance with the present invention.

## DETAILED DESCRIPTION OF THE INVENTION

U.S. provisional patent application 62/020,704 and the disclosure thereof is incorporated herein by reference in its entirety.
The method and system of the present invention is described below in terms of the measurement of the inclination of a suspended portion of a vehicle with respect to the road or a non-suspended portion of the vehicle. The following description and example is intended to be illustrative of one embodiment of the invention and is not to be construed to limit the scope of the invention.
In the figures:

$\overset{\leftrightarrow}{a}_z = A_z$ = the acceleration measurement axis normal to the suspended portion of the vehicle;

$\overset{\leftrightarrow}{a}_x, = A_x$ = the longitudinal acceleration measurement axis;

$\overset{\leftrightarrow}{a}_v = Av$ = the acceleration and deceleration vector of the vehicle. It is always parallel to the road surface independent of the vehicle attitude on the suspension system;

$\theta_v$ is the inclination of the suspended portion of the vehicle as referenced to the road and the non-suspended portion of the vehicle; i.e. the angle between $\overset{\leftrightarrow}{a}_v$ and $\overset{\leftrightarrow}{a}_x$.

$\theta_r$ = the angle between the road inclination with respect to horizontal ground.

g = the magnitude of the acceleration due to gravity.

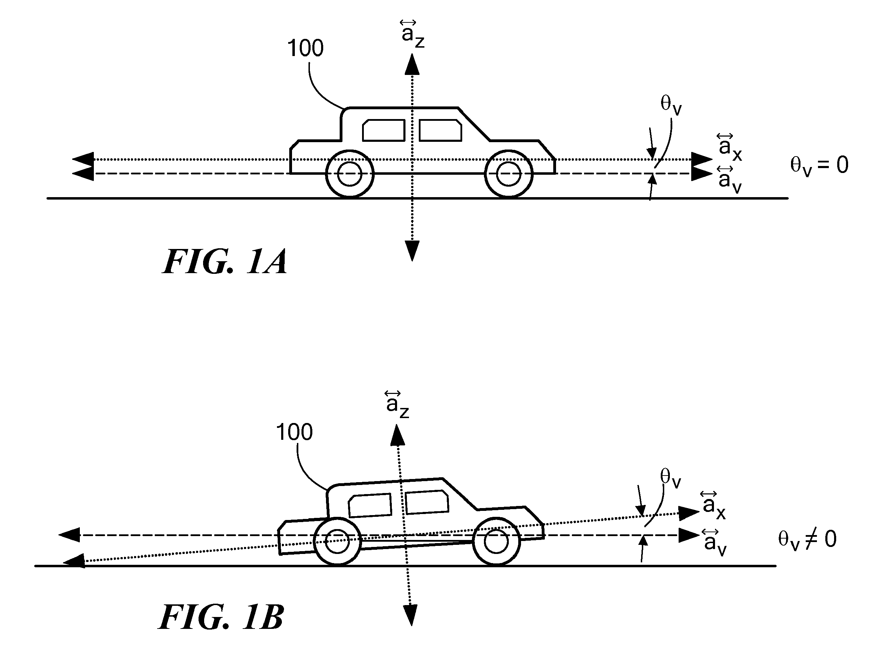

FIG. 1A illustrates the relationship between the vehicle **100** acceleration and deceleration vector to the acceleration measurement vectors under normal conditions where the suspended section of the vehicle is aligned with the non-suspended section of the vehicle. FIG. 1B illustrates the relationship between the vehicle **100** acceleration and deceleration vector to the acceleration measurement vectors under loaded conditions where the suspended section of the vehicle is not aligned with the non-suspended section of the vehicle. The change in angle of the acceleration measurement axis with respect to the vehicle acceleration and deceleration axis is $\theta_v$. In general, when the vehicle is in motion, the magnitude of the acceleration measured on $\overset{\leftrightarrow}{a}_z$ in FIG. 1A and 1B is a function of the accelerations generated by bumps and road noise, the inclination of the road with respect to a horizontal plane parallel to the earth, and the inclination of the suspended portion of the vehicle with respect to the road or unsuspended portion of the vehicle as shown in equation 1.

$$A_z = f\left(A_{z\_road}, \theta_v, \theta_r\right) \qquad [1]$$

And more particularly:

$$A_z = \left(A_{z\_road} * \cos(\theta_v) + g * \cos(\theta_r + \theta_v) + \frac{A_x}{\cos\theta_v} * \sin\theta_v\right) \qquad [2]$$

When $\theta_v = 0$, the last term in the equations 1 and 2 becomes 0, and $A_z$ is independent of $\overset{\leftrightarrow}{a}_x$. When $\theta_v \neq 0$, $A_z$ is dependent

on $\overleftrightarrow{a}_x$ and will vary as $\frac{A_x}{\cos\theta_v}$ Stated another way, when $\theta_v$ is not equal to 0, for any given road inclination, changes in $\overleftrightarrow{a}_v$ will produce a change in $A_z$ equal in magnitude to $A_x * \frac{\sin\theta_v}{\cos\theta_v}$. $A_x$

Differentiating $A_z$ with respect to $A_x$ using z and x instead of $A_z$ and $A_x$ yields

$$\frac{d[z]}{dx} = \tan\theta_v \qquad\qquad [3]$$

$$\theta_v = \tan^{-1}\left[\frac{d[z]}{dx}\right] \qquad\qquad [4]$$

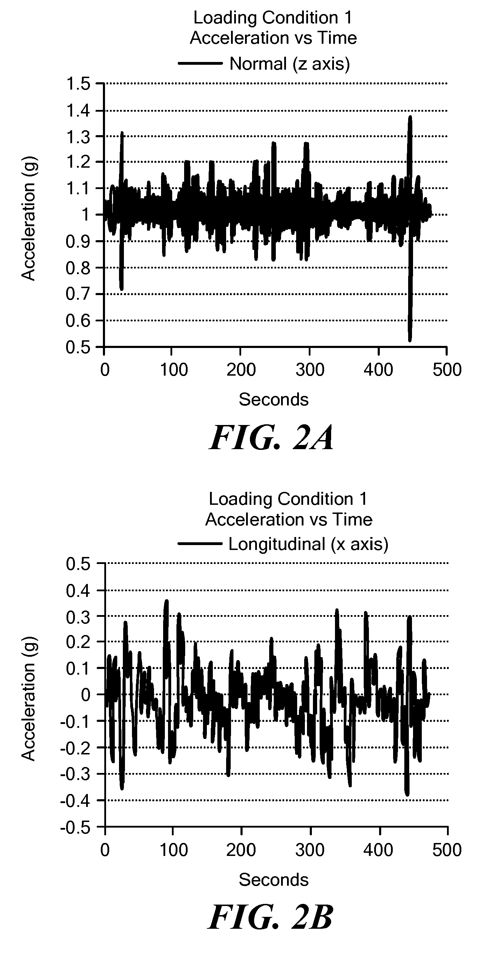

FIG. 2A and 2B are $A_z$ and $A_x$ acceleration measurements respectively, logged at 32 samples per second during an ~8 minute drive with a loading condition 1. Loading condition 1 produced a $\theta_v$ of -1.89 degrees of inclination. It can be seen of the $A_z$ accelerations in FIG. 2A:

1. The mean is near 1g because it is aligned nearly normal to the suspended section of the vehicle and therefore closely aligned with the gravity vector;
2. There are significant accelerations due to bumps in the road and road noise on the order of ± 0.4g; and
3. The large acceleration excursions are short in duration.

It can be seen in the $A_x$ accelerations in FIG. 2B:

1. The mean is near Og because it is aligned nearly parallel to the suspended section of the vehicle and therefore nearly orthogonal to the gravity vector;
2. There are significant accelerations associated with changing the velocity of the vehicle on the order of magnitude of ± 0.4g; and
3. The large acceleration excursions are longer in duration as compared to the $A_z$ acceleration time series.

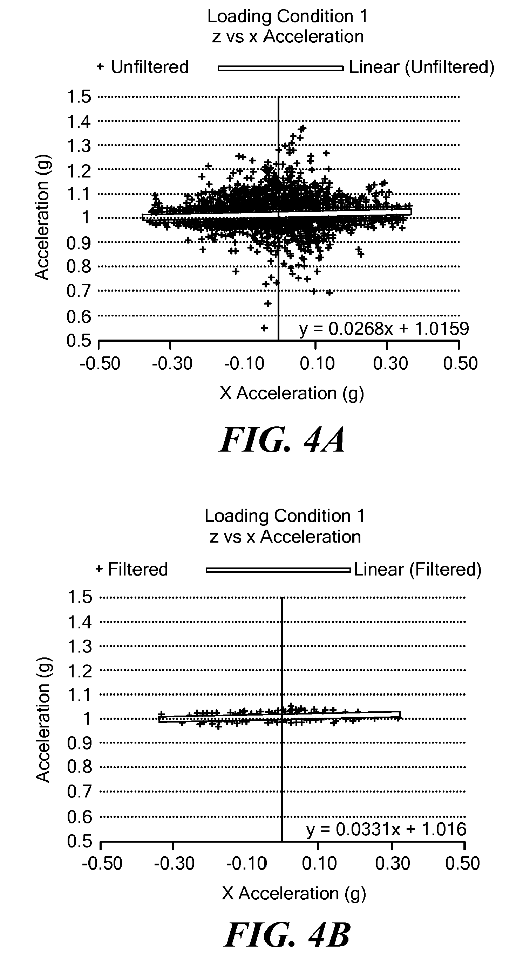

FIG 4A is the $A_z$ vs. $A_x$ scatter plot of the data and the calculated least squares best fit linear regression line. The slope of the line as calculated is 0.0268. The slope of the line approximates Tan($\theta_v$). Taking the arctangent of the slope yields an inclination angle of 1.54 degrees of inclination. The sign needs to be reversed because of the arrangement of the axis in the vehicle during the drive test. So the effective inclination angle is -1.54 degrees. This result has an error of -0.35 degrees.

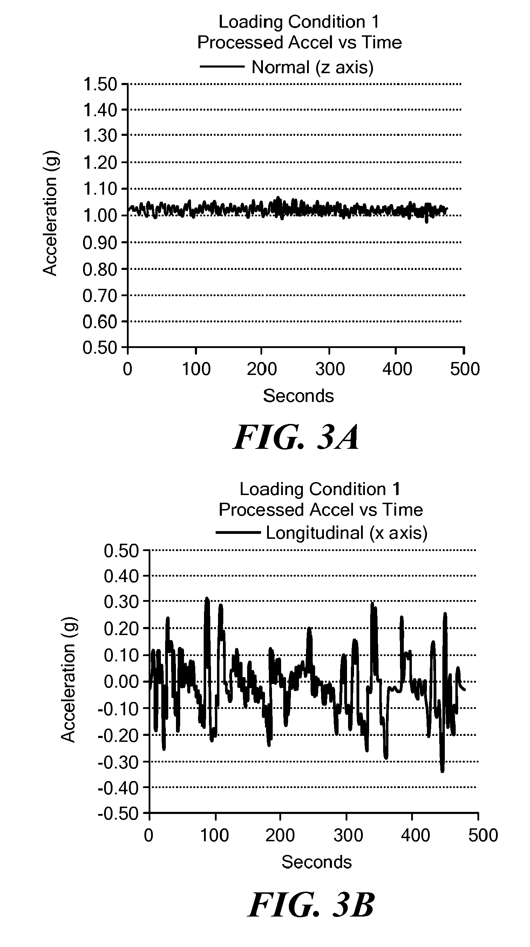

FIG. 3A and 3B are the dataset as in FIG. 2A and 2B but processed with a 32 sample fixed window average, producing an effective sample rate of 1 Hz. It can be seen of the $A_z$ accelerations in FIG. 3A:

1. The mean is still near 1g; and
2. The short duration road noise accelerations are significantly attenuated so the data range is now less than the mean ± 0.03 g.

It can be seen of the $A_x$ accelerations in FIG. 3B

1. The mean is still near Og; and
2. Vehicle accelerations ($A_x$) are not significantly attenuated with accelerations maintained at greater than ± 0.3 g.

FIG 4B is the $A_z$ vs. $A_x$ scatter plot of the processed data and the calculated least squares best fit linear regression line. The slope of the line is 0.0331. The slope of the line now more closely approximates Tan($\theta_v$). After sign reversal, the arctangent of the slope yields an inclination angle of -1.90 degrees of inclination. This result has an error of less than 0.01 degrees.

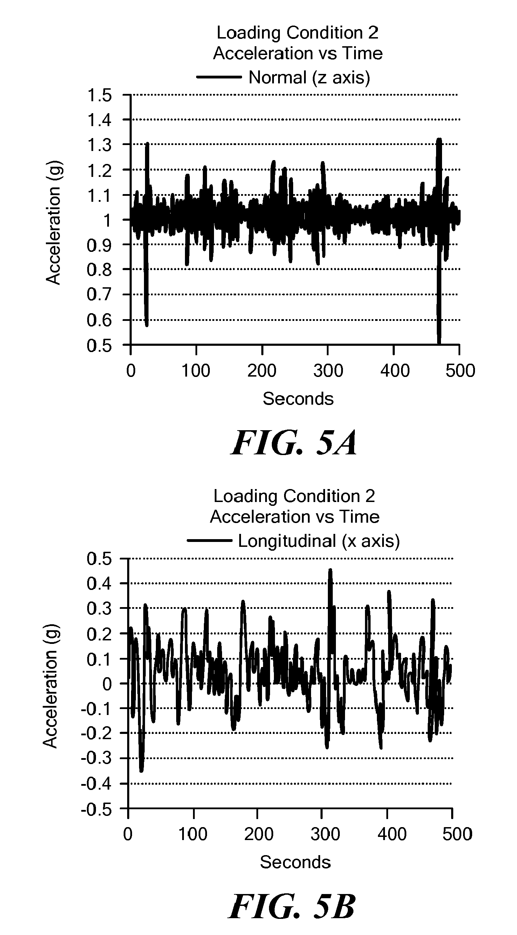

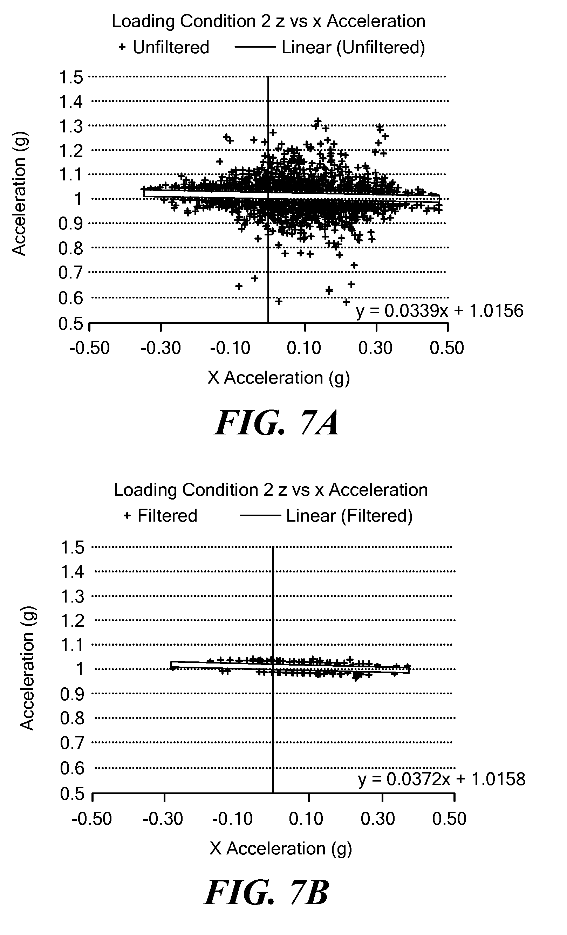

The loading condition was changed (loading condition 2) such that $\theta_v$, was increased by 4.05 degrees for an effective $\theta_v$ of 2.16 degrees of inclination. $A_z$ and $A_x$ acceleration time series data logged during the drive test is shown in FIG. 5A, and 5B. FIG. 7A shows the $A_z$ vs. $A_x$ scatter plot of the data and calculated linear regression line. The slope of the line is -0.0339 and the resulting calculated $\theta_v$ after sign change is 1.94 degrees of inclination. The error is 0.22 degrees.

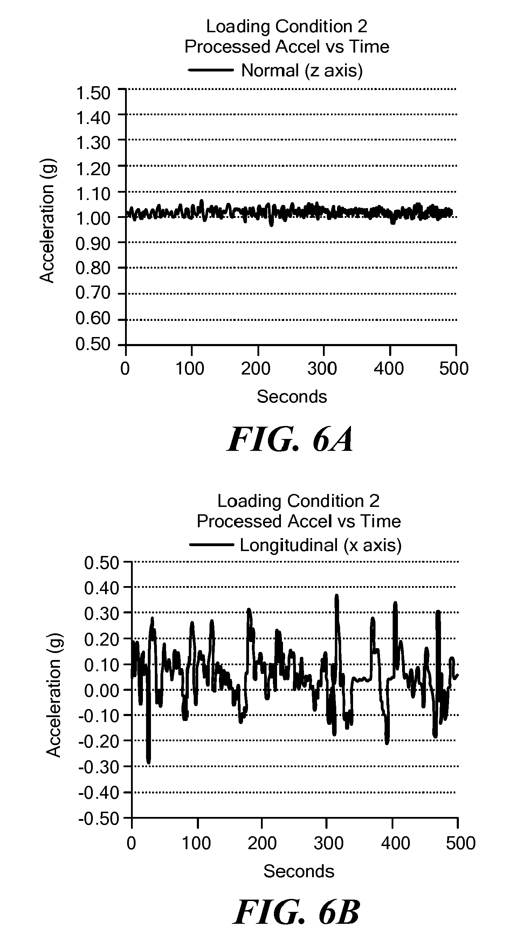

FIG. 6A and 6B are the data set in FIG. 5A and 5B processed with a 32 sample fixed window average, producing an effective sample rate of 1 Hz. FIG. 7B shows the $A_z$ vs. $A_x$ scatter plot of the processed data including the calculated linear regression line. The slope of the line is -0.0372 and the resulting calculated inclination angle $\theta_v$, after sign change, is 2.13 degrees of inclination. The error is less than 0.03 degrees.

The method detailed above as applied to acceleration data collected during multiple drives has shown an accuracy of better than 0.1 degrees in determining the inclination $\theta_v$ of a vehicle's suspended section in relation to the non-suspended section of a vehicle independent of the road inclination.

The embodiment detailed here only used z and x acceleration data and a simple fixed window average as the filtering method to illustrate the technique and results achievable, but it should not be construed to preclude other axes of acceleration or more advanced filtering techniques, the effective sampling rate and the like.

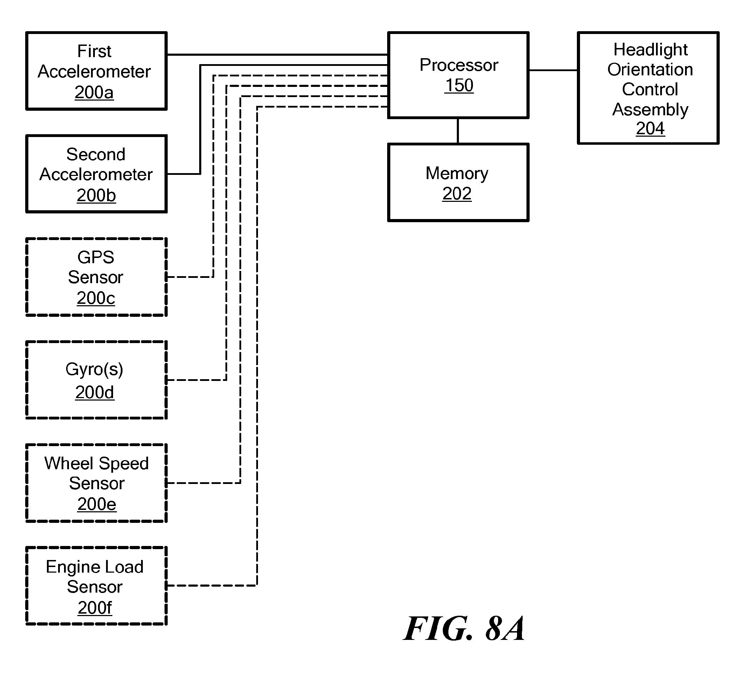

A block diagram illustrating one embodiment of the presently disclosed system is illustrated in FIG. 8A. The system includes a processor **150** coupled to a memory **202**. The processor **150** executes program instructions out of the memory **202** to perform the functions presently described herein. The processor receives X and Z axis acceleration data for pitch angle determination from an first accelerometer **200a** oriented in a plane normal to the vehicle with the X axis aligned along the longitudinal axis of the vehicle. Acceleration data may be provided to the processor **150** via a second accelerometer **200b** oriented to provide Y axis acceleration data orthogonal to the X and Y axis. GPS sensors **200c**, one or more gyro(s) **200d**, one or more wheel speed sensors **200e** and an engine load sensor **200f** may optionally be provided for use in the disclosed system as subsequently described. In the exemplary embodiment, the processor **150** produces an output that is coupled to a headlight orientation control system **204** to control headlight leveling.

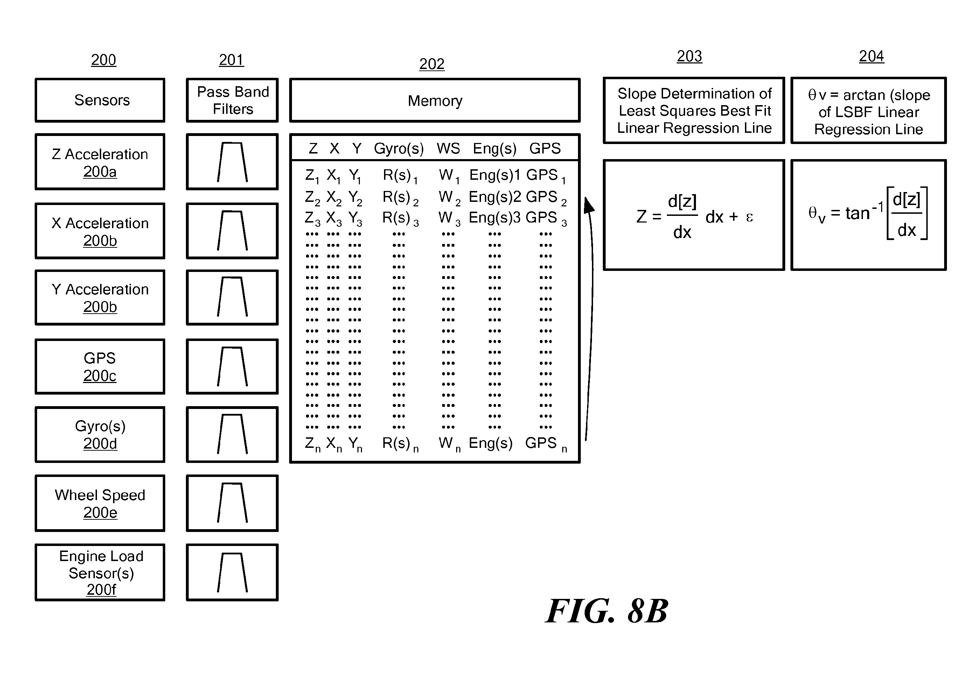

Referring to FIG. 8B, data from the acceleration sensors **200** or inclinometer are filtered by low and/or band pass filters **201** to remove or attenuate the accelerations due to road noise and/or changes in road inclination. The actual filtering technique may vary and be determined for a specific vehicle type or class, to optimize performance for the characteristics of the vehicle type or class. An analog or digital filtering approach can be employed to filter the acceleration data. By way of example and not limitation, digital filtering, including low pass or band pass filtering, may be performed as disclosed in Smith, Stephen W. 2003, Digital Signal Processing (Burlington, MA: Newnes (Elsevier Inc.)), Chapters 14-21, which is incorporated herein by reference or via any other suitable technique known in the art.

As the data is collected and processed it is stored in memory **202** for processing. The actual size of the memory array may vary and be determined for a specific vehicle type or class to optimize performance for the characteristics of the vehicle type or class.

Once the predetermined amount of data needed has been collected, a least squares linear regression is calculated 203 for the data set(s). The amount of data needed will vary depending upon vehicle type or class. One way to experimentally determine the amount of data needed to be collected for a particular vehicle type or class is described in the procedure below.

1. Determine how accurately $\theta_v$ needs to be for the intended application.
2. Collect data sets from multiple drives of various types.
3. Filter the data sets.
4. Calculate the slope of the best fit least squares linear regression line for each dataset starting with 10 data points and increasing to 11, 12, 13, etc, until all the data from each dataset is used for the slope calculation.
5. Calculate $\theta_y$ versus time by taking the arctangent of each of the calculated slopes.
6. Plot the calculated $\theta_v$ versus time for each drive on the same graph.
7. Identify in the plot, the point where all the calculated $\theta_v$ from the various drives are within the accuracy/tolerance identified in step 1.
8. Determine how may data points were used in the calculation at the point in the plot identified in step 7. This is the minimum number of points required in the dataset for the calculation to achieve the accuracy identified in step 1.

The arctangent of the slope of the calculated linear regression line is taken **204** to determine the inclination of the suspended section of the vehicle with respect the non-suspended portion of the vehicle. The partitioning of the implementation can be achieved in any manner using discrete systems for each functional block or integrating functional blocks together in part or in whole to achieve the same end result.

From a functional flow perspective, acceleration data is gathered **300** from the acceleration sensor(s) **200** at a frequency at least equal to or greater than twice the highest frequency component of interest until a predetermined number of samples are gathered as illustrated in step **302**. Sampling frequency is dependent upon the sensor being used and the location of the sensor. If the sensor element has a low pass response with a -3dB bandwidth of 20Hz, the sampling frequency needs to at least 40 Hz to prevent aliasing. Furthermore if there is vibration energy larger in magnitude at a frequency where the attenuation of the sensor at that frequency does not reduce the magnitude to a few milli-g's, the sampling frequency must be at least 2X that frequency so the vibrational energy can be averaged out. By way of example, a sensor with a -3dB bandwidth of 25 Hz and a roll off of 20dB/decade is mounted in a location that has vibration acceleration of 0.1 g at 50Hz (3000 RPM). The sensor will attenuate the 50Hz signal by a factor of 2 (6dB/decade). The resulting vibration acceleration will be 0.05g. In this case sampling frequency should be increased to at least 100 Hz, so that energy from the vibration can be averaged or filtered out so as to not cause error in the calculation of $\theta_v$.

The samples are then filtered using a low pass filter as depicted in step **304** with the desired effect to be attenuation of higher frequency road noise associated accelerations with minimal attenuation of lower frequency vehicle accelerations and decelerations. By way of example, a low pass filter may provide a cutoff frequency of 1 Hertz to attenuate such undesired high frequency road noise. Alternatively, a pass band filter can be used to remove very low frequency accelerations associated with slowly changing road inclination and higher frequency accelerations associated with road noise while passing accelerations associated with vehicle accelerations and decelerations. By way of example and not limitation, the band pass filter may have upper and lower cutoff frequencies of 1 Hertz and 0.1 Hertz respectively to provide desired filtering.

The filtered data points are stored in memory as illustrated in step **306** and the memory pointer is incremented as illustrated in step 308 to the next available memory location in the memory array **202**. Once a predetermined number of filtered data points have been gathered to allow for accurate calculation of the slope as determined in decision step **310**, for example, in the manner previously described, the data set is checked to see if there is a predetermined amount of variation in the $A_x$ acceleration that will ensure the $A_z$ dependence on $A_x$ can be accurately established as depicted in step **312**. Once these conditions are met, the data in the memory array **202** may be additionally filtered as illustrated in step **314**. By way of example, if the filter selected to filter the acceleration data were a low pass filter, and the vehicle was sitting stationary but running for a few minutes, the data array could be filled with constant acceleration values from which a dependency of Z acceleration on X accelerations cannot be determined. A simple test looking at the range of X acceleration values being greater than some reasonable limit can be used to ensure the data in the array will be able to establish a z dependence on x. Normal vehicle accelerations and decelerations are in the range of 0 to $\pm0.4$ g (range of 0.8g). Consequently, one could set a minimum limit for the minimum range of the x acceleration data near 0.05g.

Other ways to qualify the data being put into the array to ensure there is an adequate X acceleration range can be realized using other optional sensors or decision techniques. Data can be qualified for storage in the array only if the vehicle is in motion. By way of example, this can be accomplished using GPS data from a GPS sensor **200d**, a wheel speed sensor **200e** or gyro information from one or more gyros **200f**. Sequential $A_x$ acceleration data points can be compared and $A_z$, $A_x$ data pairs stored only if they are different from the previous $A_z$ acceleration value.

For the processed data set, a least squares best fit linear regression line is determined as illustrated in step **316**, and $\theta_v$ is calculated by taking the arctangent of the previously calculated linear regression line as shown in step **318**. The memory pointer is checked to see if it has reached the end of the memory array as illustrated in step **320** and, if it has, it is reset to the beginning of the memory array so as to overwrite older data with newer data as shown in step **322**. Processing then restarts at step **300**. The least squares best fit linear regression to find the slope of the filtered acceleration Az vs. Ax data pairs may be calculated as disclosed in Bevington, Philip R., Robinson, Keith D., 2003, Data Reduction and Error Analysis for the Physical Sciences, 3rd ed., (New York, NY: McGraw Hill), Chapter 6, which is incorporated by reference or via any other suitable technique known in the art.

Furthermore, once $\theta_v$ is successfully calculated for the first time, it can be stored in a separate memory section and new values of the $\theta_v$ can optionally be calculated for each new data point generated on a rolling basis.

Supplemental sensor data and GPS data can also be used to establish further confidence and credibility checking. For example, GPS position data combined with known road inclination for a given position can establish reference inclination for non-suspended portion of the vehicle $\theta_r$. $\theta_v$ can be further calculated and checked by subtracting $\theta_r$ from the instantaneous total angle of inclination $\theta_T$. $\theta_T$ can be calculated using the same processed acceleration data and simply taking the Arctangent of $(A_x/A_z)$.

Wheel speed sensors **200e** and engine loading information from an engine load sensor **200f** can also be used to determine $\theta_r$ and $\theta_v$ can be calculated in the same manner from $\theta_T$ as described above. Additionally, changes in wheel speed and engine loading can be used to qualify good data as $A_x$ accelerations will be necessarily present and therefor make good candidates for determining $A_z$ dependence on $A_x$ accelerations.

Pitch gyro information can be used to monitor changes in $\theta_r$. When rapid changes in $\theta_r$ are detected, data can be flagged for additional processing or discounting partially or completely.

The above-described method is implemented using a computational device executing program steps out of a memory to provide the functional operations described herein. The data filtering described above may be achieved via analog or digital filtering techniques known in the art.

Once the inclination of the suspended portion of the vehicle with respect to the road has been determined in accordance with the presently described method, the system provides an output signal indicative of the inclination which is employed to generate at least one control signal that is provided to an electromechanical or electronic control system. In the illustrated embodiment, the at least one control signal may be employed to control a headlight leveling system, for example, such as disclosed in US published application 2012/0310486 which is incorporated herein by reference, or any other lamp assemblies providing for headlight leveling in response to a control signal as known in the art. It should be understood that the at least one output signal may alternatively be used to control a device or system for purposes of vehicle electronic stability control, vehicle oil level monitoring tilt correction, vehicle hill start assist, trailer braking, truck load monitoring for scale correction, suspension adjustment to adjust for load variation and other applications in which operation of an electrical, electronic or electromechanical device or system is based, at least in part, upon the inclination of the suspended portion of a vehicle with respect to the road.

While the disclosed system has been described in one embodiment with respect to the control of a headlight leveling substem based on a calculated angle of inclination of a suspended portion of a vehicle with respect to a non-suspended portion of a vehicle, it will be appreciated that the determined angle of inclination of one portion of an object, such as a suspended portion of a moving object, with respect to a non-suspended portion of the moving object or a reference plane, may be used to generate a control signal that is in turn employed as an input to an electromechanical or electronic control subsystem. Thus, while the disclosed technique has been described in terms of its application to a moving vehicle, it is also applicable to other moving objects.

It should be understood by those of ordinary skill in the art that the above-described method and system is illustrative of the present invention and is not to be viewed as limited except by the scope and spirit of the appended claims.

**Claims**

1. A method for controlling an electromechanical system based on the inclination of a suspended portion of a vehicle with respect to a road comprising:

   obtaining first and second signals representative of z axis and x axis acceleration, respectively, from at least one sensor coupled to the suspended portion of the vehicle;
   filtering the first and second signals to attenuate high frequency components of acceleration to produce filtered first and second signals;
   calculating a slope corresponding to a least squares best fit linear regression using the filtered first and second signals;
   generating an indication of inclination of the suspended portion of the vehicle ($\theta_v$) by calculating the arctangent of the slope determined in the calculating step;
   generating at least one control signal based upon the indication of inclination of the suspended portion of the vehicle; and
   providing the at least one control signal to the electromechanical system.

2. The method of claim 1 wherein the electromechanical system is a headlight leveling system and the at least one control signal is operative to provide control of the inclination of the headlights of the vehicle with respect to the road.

3. The method of claim 1 or 2 wherein:

   obtaining the first and second signals includes obtaining, at a predetermined sampling frequency, a predetermined number of first and second data samples corresponding to z axis and x axis acceleration, respectively, from at least one sensor coupled to the suspended portion of the vehicle;
   filtering the first and second signals includes the step of filtering the z axis and x axis data samples to attenuate high frequency components of acceleration to produce filtered z axis and x axis data samples and storing the filtered z axis and x axis data samples in a memory; and
   calculating the slope corresponding to the least squares best fit linear regression using the filtered first and second signals includes calculating a slope corresponding to a least squares best fit linear regression using the filtered z axis and x axis data samples.

4. The method of claim 3 further comprising checking the filtered data samples to verify that a range of x axis acceleration values exceeds a predetermined limit so as to ensure that the z axis acceleration can be accurately established.

5. The method of claim 4 wherein the predetermined limit is 0.05g.

6. The method of any of claims 3 to 5 wherein the step of filtering comprises the step of performing low pass digital filtering on the stored data samples z axis and x axis data samples to attenuate high frequency road noise.

7. The method of any of claims 3 to 5 wherein the step of filtering comprises the step of performing band pass digital filtering on the stored z axis and x axis data samples to attenuate high frequency road noise and very low frequencies associated with slowly changing road inclinations.

8. The method of any preceding claim further including calculating $\theta_v$ on a rolling basis in response to obtaining each additional pair of z axis and x axis acceleration values.

9. The method of any preceding claim wherein the at least one sensor includes at least one accelerometer.

10. The method of claim 9 further including at least one additional sensor selected from the group of a gyro, a wheel speed sensor and a gps position sensor, the method including verifying the data used in the determination of the inclination of the suspended portion of the vehicle from data produced by the at least one additional sensor.

11. Apparatus for controlling an electromechanical system based on the inclination of a suspended portion of a vehicle with respect to a road comprising:

    a processor;
    at least one memory in communication with the processor, the at least one memory containing a computer program stored therein, the processor operative upon execution of the computer program to:

        obtain at a predetermined sampling frequency a predetermined number of first and second data samples corresponding to z axis and x axis acceleration respectively from at least one sensor coupled to the suspended portion of the vehicle;
        filter the z axis and x axis data samples to attenuate high frequency components of acceleration to produce filtered z axis and x axis data samples;

    store the filtered z axis and x axis data samples in the at least one memory;

        calculate a slope corresponding to a least squares best fit linear regression using the filtered z axis and x axis data samples;
        generate an indication of inclination of the suspended portion of the vehicle ($\theta_v$) by calculating the arctangent of the slope determined in the calculating step;
        generate at least one control signal based upon the indication of inclination of the suspended portion of the vehicle; and
        provide the at least one control signal to the electromechanical system.

12. The apparatus of claim 11 wherein the electromechanical system is a headlight leveling system and the at least one control signal is operative to provide control of the inclination of the headlights of the vehicle with respect to the road.

13. The apparatus of claim 11 or 12 wherein the at least one sensor includes at least one accelerometer.

14. The apparatus of any of claims 11 to 13 wherein the processor to is operative to perform low pass filtering of the filtered z axis and x axis acceleration values to attenuate high frequency road noise.

15. The apparatus of any of claims 11 to 13 wherein the processor is operative to perform band pass filtering of the filtered z axis and x axis acceleration values to attenuate high frequency road noise and very low frequencies associated with slowly changing road inclinations.

16. The apparatus of any of claims 11 to 15 further wherein the processor is further operative to verify that a range of x axis acceleration values exceeds a predetermined limit so as to ensure that the z axis acceleration can be accurately established.

17. The apparatus of claim 16 wherein the predetermined limit is 0.05g.

**FIG. 1A**

**FIG. 1B**

EP 2 963 385 A1

FIG. 2A

FIG. 2B

Loading Condition 1
Processed Accel vs Time
——— Normal (z axis)

*FIG. 3A*

Loading Condition 1
Processed Accel vs Time
——— Longitudinal (x axis)

*FIG. 3B*

Loading Condition 1
z vs x Acceleration

+ Unfiltered ━━━━━━━━━ Linear (Unfiltered)

$y = 0.0268x + 1.0159$

X Acceleration (g)

## FIG. 4A

Loading Condition 1
z vs x Acceleration

+ Filtered ━━━━━━━━━ Linear (Filtered)

$y = 0.0331x + 1.016$

X Acceleration (g)

## FIG. 4B

FIG. 5A

FIG. 5B

Loading Condition 2
Processed Accel vs Time
——— Normal (z axis)

**FIG. 6A**

Loading Condition 2
Processed Accel vs Time
——— Longitudinal (x axis)

**FIG. 6B**

Loading Condition 2 z vs x Acceleration

+ Unfiltered ——— Linear (Unfiltered)

$y = 0.0339x + 1.0156$

X Acceleration (g)

## FIG. 7A

Loading Condition 2 z vs x Acceleration

+ Filtered ——— Linear (Filtered)

$y = 0.0372x + 1.0158$

X Acceleration (g)

## FIG. 7B

```
┌──────────────┐          ┌──────────────┐          ┌──────────────┐
│    First     │          │              │          │  Headlight   │
│ Accelerometer│──────────│  Processor   │──────────│ Orientation  │
│    200a      │          │    150       │          │   Control    │
│              │          │              │          │  Assembly    │
└──────────────┘          └──────────────┘          │    204       │
                                 │                   └──────────────┘
┌──────────────┐          ┌──────────────┐
│   Second     │          │              │
│ Accelerometer│          │   Memory     │
│    200b      │          │    202       │
│              │          │              │
└──────────────┘          └──────────────┘

┌──────────────┐
│    GPS       │
│   Sensor     │
│    200c      │
└──────────────┘

┌──────────────┐
│   Gyro(s)    │
│    200d      │
└──────────────┘

┌──────────────┐
│ Wheel Speed  │
│   Sensor     │
│    200e      │
└──────────────┘

┌──────────────┐
│ Engine Load  │
│   Sensor     │
│    200f      │
└──────────────┘
```

*FIG. 8A*

EP 2 963 385 A1

| 200 | 201 | 202 | 203 | 204 |
|---|---|---|---|---|
| Sensors | Pass Band Filters | Memory | Slope Determination of Least Squares Best Fit Linear Regression Line | $\theta v = arctan$ (slope of LSBF Linear Regression Line) |

**200** Sensors

Z Acceleration **200a**

X Acceleration **200b**

Y Acceleration **200b**

GPS **200c**

Gyro(s) **200d**

Wheel Speed **200e**

Engine Load Sensor(s) **200f**

**202** Memory

| Z | X | Y | Gyro(s) | WS | Eng(s) | GPS |
|---|---|---|---|---|---|---|
| $Z_1$ | $X_1$ | $Y_1$ | $R(s)_1$ | $W_1$ | Eng(s)1 | $GPS_1$ |
| $Z_2$ | $X_2$ | $Y_2$ | $R(s)_2$ | $W_2$ | Eng(s)2 | $GPS_2$ |
| $Z_3$ | $X_3$ | $Y_3$ | $R(s)_3$ | $W_3$ | Eng(s)3 | $GPS_3$ |
| ... | ... | ... | ... | ... | ... | ... |
| $Z_n$ | $X_n$ | $Y_n$ | $R(s)_n$ | $W_n$ | Eng(s) | $GPS_n$ |

**203** Slope Determination of Least Squares Best Fit Linear Regression Line

$$Z = \frac{d[z]}{dx} dx + \varepsilon$$

**204** $\theta v = arctan$ (slope of LSBF Linear Regression Line)

$$\theta_v = \tan^{-1}\left[\frac{d[z]}{dx}\right]$$

*FIG. 8B*

Get Acceleration Data
300

Collected "X" seconds of acceleration data?
302
No

Yes

Filter Acceleration data to generate 1 (Z,X,Y...) data set
304

Store (Z,X,Y...) in position determined by Memory Pointer in the Circular Memory Array
306

Increment Memory Pointer
308

Enough data collected for accurate slope determination?
310
No

Yes

Enough data points with significant x accelerations for accurate slope determination?
312
No

Yes

Filter Data
314

Determine Slope (dz/dx) of Best Fit Linear Regression Line
316

θv = arctangent of slope (dz/dx) = suspended portion of the vehicle's inclination with respect to the unsuspended portion of the vehicle
318

End of Memory?
320
No

Yes

Reset Memory Pointer to beginning of Memory Array
322

*FIG. 9*

Europäisches
Patentamt

European
Patent Office

Office européen
des brevets

# EUROPEAN SEARCH REPORT

**Application Number**

EP 15 17 5120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/156150 A1 (KASABA YUSUKE [JP] ET AL) 5 June 2014 (2014-06-05) <br> * paragraphs [0003], [0034], [0040], [0044], [0045], [0047] * <br> * figures 2, 4B * <br> ----- | 1-17 | INV. <br> G01C9/08 <br> B60Q1/10 <br> B60Q1/115 <br> B60R1/06 <br> B60W40/11 |
| A | US 2013/041577 A1 (PUHALLA JEFFREY S [US] ET AL) 14 February 2013 (2013-02-14) <br> * paragraph [0014] * <br> ----- | 1-17 | |
| A | JP 2009 126268 A (PANASONIC CORP) 11 June 2009 (2009-06-11) <br> * abstract * <br> ----- | 1-17 | |
| A | EP 1 930 690 A1 (CONTINENTAL AUTOMOTIVE GMBH [DE]) 11 June 2008 (2008-06-11) <br> * figure 3 * <br> ----- | 1-17 | |

**TECHNICAL FIELDS SEARCHED (IPC)**

G01C
B60Q
B60R
B60W

The present search report has been drawn up for all claims

| Place of search | Date of completion of the search | Examiner |
|---|---|---|
| The Hague | 26 October 2015 | Berbil Bautista, L |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 15 17 5120

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2015

| Patent document cited in search report | | Publication date | Patent family member(s) | | Publication date |
|---|---|---|---|---|---|
| US 2014156150 | A1 | 05-06-2014 | CN | 103847617 A | 11-06-2014 |
| | | | EP | 2738041 A2 | 04-06-2014 |
| | | | JP | 2014108639 A | 12-06-2014 |
| | | | US | 2014156150 A1 | 05-06-2014 |
| US 2013041577 | A1 | 14-02-2013 | AU | 2012295434 A1 | 16-01-2014 |
| | | | CN | 103702884 A | 02-04-2014 |
| | | | EP | 2741947 A1 | 18-06-2014 |
| | | | US | 2013041577 A1 | 14-02-2013 |
| | | | WO | 2013025401 A1 | 21-02-2013 |
| JP 2009126268 | A | 11-06-2009 | NONE | | |
| EP 1930690 | A1 | 11-06-2008 | AT | 428905 T | 15-05-2009 |
| | | | EP | 1930690 A1 | 11-06-2008 |

EPO FORM P0459

## REFERENCES CITED IN THE DESCRIPTION

**Patent documents cited in the description**

- US 62020704 A
- US 20120310486 A

**Non-patent literature cited in the description**

- **SMITH, STEPHEN W.** Digital Signal Processing. Elsevier Inc, 2003
- **BEVINGTON, PHILIP R. ; ROBINSON, KEITH D.** Data Reduction and Error Analysis for the Physical Sciences. McGraw Hill, 2003